# EUROPEAN PATENT APPLICATION

(11) **EP 4 421 706 A1**
(43) Date of publication of application: **28.08.2024**
(21) Application number: 23158832.8
(22) Date of filing: 27.02.2023
(51) Int. Cl.: G06Q 10/087, G06V 20/80, G06Q 30/018, G06Q 50/28

(54) **METHOD AND SYSTEM FOR IDENTIFYING ARTICLES AND LOAD UNITS IN A WAREHOUSE**

(71) Applicant: Dematic GmbH, 63150 Heusenstamm (DE); Dematic Corp., Grand Rapids, MI 49505 (US); Dematic Pty Ltd, Belrose, NSW 2085 (AU); STILL GmbH, 22113 Hamburg (DE)
(72) Inventor: Lewandoske, Max Reinhard, 63741 Aschaffenburg (DE); Khodl, Michael S., Grand Rapids, 49504 (US); To, Andrew, Merrylands, 2160 (AU); Abel, Bengt, 21335 Lüneburg (DE)
(74) Representative: Moser Götze & Partner Patentanwälte mbB

(57) **Abstract**

Method and system for identifying articles and/or load units in a warehouse to positively and uniquely identify load units and articles by using characteristics of their surface to create a digital unique identifier that can be used to identify each load unit or article and in turn allows their tracking.

## Description

The invention relates to a method and system for identifying articles and load units in a warehouse.

Load units (e. g. inventory totes, receptacles, shipping cartons, pallets, load carriers etc.) containing articles are commonly tracked within a warehouse or order fulfilment facility. It is known to use labels, bar codes and even chemical tags or RFID tags on the load units to identify these and allow the tracking thereof.

Accordingly, it is also known to use similar ways of tracking the articles themselves.

For example, WO 2008/110433 A1 describes the use of RFID tags in a storage system, in which a plurality of different products can be stored, each of the products being equipped with a radio frequency identification (RFID) transponder, and an antenna for the identification of the products by means of the RFID transponder.

However, labels, RFID tags etc. are prone to be lost, damaged or decline in quality and therefore are prone to errors. Therefore, they must be kept in good condition and be renewed periodically. In addition, the use of labels or RFID tags creates waste which is ecologically unwanted.

An object of the invention is therefore to provide means to allow an improved tracking of load units and articles in a warehouse.

This object is achieved by the method presented in claim 1 and the system of claim 7.

In accordance with the invention, it has been recognized that it is possible to positively and uniquely identify load units and articles by using characteristics of their surface to create a digital unique identifier that can be used to identify each load unit or article and in turn allows their secure tracking.

In addition, the digital unique identifier based on surface characteristics allows to positively identify articles e. g. in returns handling stations, as returners often do not use a label at all or a wrong label on the returned article. The method supports the operator of the returns handling stations quickly and effectively performing such a check.

Further, the identified article can be identified as being an original article using the digital unique identifier in contrast to fake or counterfeit articles which are sometimes returned instead of the original article.

In other words, a vision system captures one or more images of the load unit or article and generates a unique finger print as a digital unique identifier therefrom using characteristic features and/or their combination.

It has been recognized in the context of the invention that even if load units or articles seem to be identical to the human eye, an image processed to extract and/or compute features and attributes therefore will show unique differences that may be used to create digital unique identifiers.

Such characteristic features may include one or more features from the following list: form, edges, surface color, surface structure, surface markings, writing etc. The characteristic features may also include attributes of the previously mentioned features, e. g. hue, saturation, brilliance and intensity of color besides color itself, location of feature on the load unit or article.

The one or more images are processed to extract the selected features and attributes combine their attributes and compute a digital unique identifier based upon them.

Such an extraction and computation may include image analysis techniques based on pattern matching techniques. As an alternative or in addition Al techniques may be used.

The invention is also directed to a system in a warehouse using a vision system and computational systems. The vision system will very likely include several cameras, possibly rigidly mounted to material handling components, and possible respectively mounted light sources. The vision system will be data wise connected to the computational systems so as to exchange image data therewith allowing the computational systems to process the images to extract the selected features and attributes and combine their attributes and compute a digital unique identifier based upon them.

The cameras may be industrial camera(s) with a resolution of possibly greater than 5 megapixels. A material handling component will be a conveyor, rack-servicing-machine, e. g. mini load or shuttle, forklifts, picking station or returns handling station.

A light source can be fixed relative to the camera(s) to provide consistently lit images.

The digital unique identifier will be stored in a database on premise or in the cloud and used for subsequent identifying within the warehouse at certain identification points or stations.

The automatic warehouse may include a warehouse management system (WMS) having an inventory database detailing what inventory should be present in the warehouse as well as where particular inventory should be stored in the warehouse. The system and method utilize the digital unique identifier to determine actual, physical locations of load units (e. g. totes, receptacles, cartons, pallet, load carrier etc.) within the warehouse. The warehouse management system (WMS) then compares the determined actual locations of load units with the expected locations in the inventory database and makes appropriate corrections to the database and/or the load units. The system may reduce or eliminate undesirable downtime that typically may be required to audit the inventory stored within a warehouse.

Further features and details of the invention are apparent from the description hereinafter of the drawing, in which
- Figure 1: shows a schematic plan view of a conveyor system and a rack store for placing packets into and out of storage;

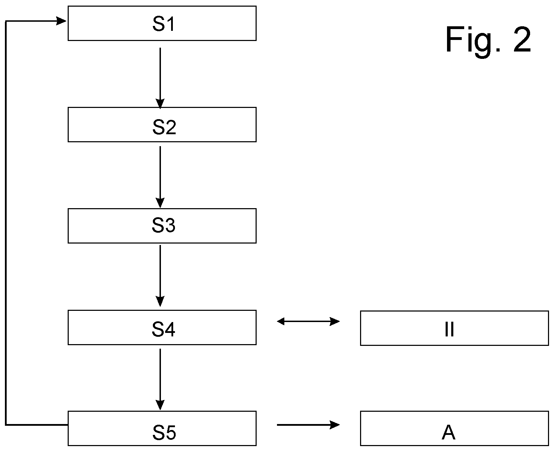

- Figure 2: shows a schematic flow diagram of the control method;
- Figure 3: shows a returns station;
- Figure 4: shows a perspective view of a conveyor section;

- Figure 5: shows a perspective view of a storage rack with a rack serving apparatus.

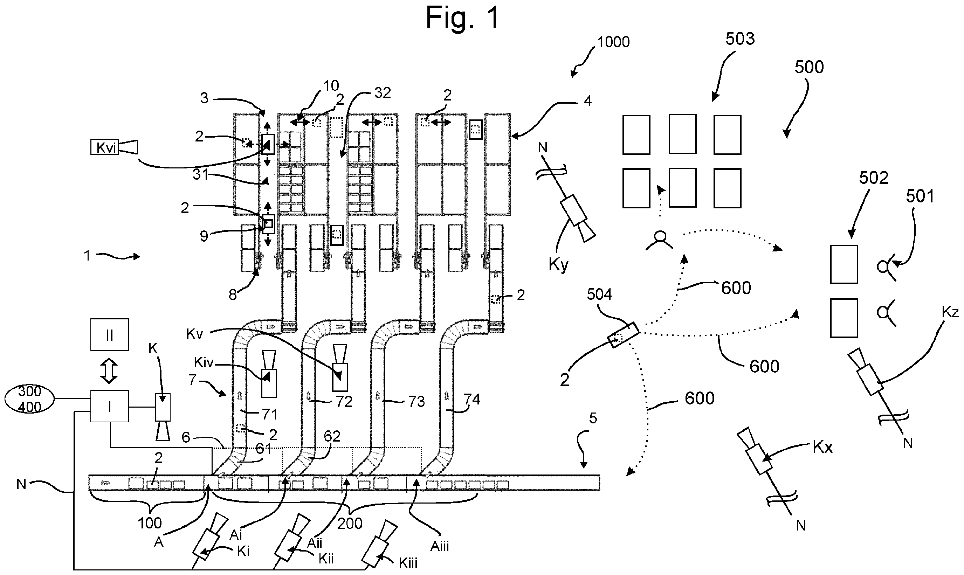

Figure 1 shows a plan view of a part of a central warehouse 1000 with a conveyor system 1 for placing articles 2 into storage in storage rack aisles 3 which are formed by storage racks 4 which are arranged in parallel with and opposite each other and have a plurality of levels.

The conveyor system 1 includes a distribution conveyor 5 which conveys articles 2 into and out of storage. Incoming and outgoing conveyors 7 are arranged between the distribution conveyor 5 and the storage racks 4. These conveyors are connected to the distribution conveyor 5 by introducing and discharging area 6 and are connected to the storage rack aisles 3 via goods lifts 8. Adjacent incoming/outgoing conveyors 71 and 72, 73 ... are arranged in parallel with each other.

The articles 2 are transported by the goods lifts 8 from the incoming conveyors 7 into the rack levels of the storage racks 4 or from the storage levels to the outgoing conveyors 7. The articles 2 are transported within the rack levels of the storage racks 4 via rack serving apparatuses 9.

Preferably, a rack serving apparatus 9, e. g. a shuttle vehicle, moves on each rack level. The rack serving apparatus 9 is equipped with load picking-up means, e. g. telescoping arms which permit a transfer up to a transport surface of the rack serving apparatus 9 or down from a transport surface of a rack serving apparatus 9.

The method when placing articles 2 into storage will be explained hereinafter with the aid of figure 1.

In the region of the feed 100, images of the distribution conveyor 5, on which e. g. an article 2 is moved, are taken at short intervals by an IP camera K.

The image data from the IP camera K is communicated via a network N to a computer I and is prepared and processed so that they can be used in an image processing module 300 for downstream identification determination 400 based on extracted selected features and attributes and combination thereof to compute a digital unique identifier of the article 2 located on the distribution conveyor 5. The article 2 may be a single item or a container containing one or more items.

In other words, the article 2 is identified (and therefore also tracked) using a digital unique identifier based on visual features of images taken of the respective article.

For this purpose, further IP cameras Ki, ii, iii etc. are arranged at suitable points within the warehouse 1000 to allow identification when and where necessary.

The cameras K are all connected to the computer I via known connection with high bandwidth, e. g. network technology via power-over-Ethernet connections N, GSML/GSML2, FPD-LINK, MIPI/CSI etc.

The information of the articles 2 is also incorporated within the superordinate warehouse management controller II via suitable interfaces in order to take into account the routing and objectives of the order processing and to store in a database the digital unique identifier of each article 2 present in the warehouse. The database can provide a lookup possibility when comparing a digital unique identifier, e. g. for proof if original.

Based on the identification of an article 2 using the digital unique identifier, the computer I generates material flow control commands for the actuators A, Ai, Aii, Aiii etc. for controlling the conveying movement of the respective goods being conveyed or articles 2 on the distribution conveyor 5 and also for placement into storage, storage, removal from storage, optionally sorting and conveyance thereof for order processing.

Therefore, in the present case the actuator of the discharging area 6 is activated for the article 2, recognized in the area of the feed 100, according to its speed such that the article 2 passes onto the discharging conveyor 61 and thus onto the conveyor 71.

The actuator A - designed as a slide - of the discharging area 6 is thus controlled by the computer I on the basis of digital unique identifier such that the article 2 is discharged.

It is understood that the computer I or the controller running therein also controls the distribution conveyor 5, which is designed as a roller.

An article 2 is thus conveyed on the distribution conveyor 5 for placement into storage and after passing through a discharging conveyor 61 it passes via the incoming conveyor 71 to the goods lift 8. From the goods lift 8, the article 2 is received by a rack serving apparatus 9 and thus placed into storage into a destination rack aisle 31 or corresponding storage rack of the aisle.

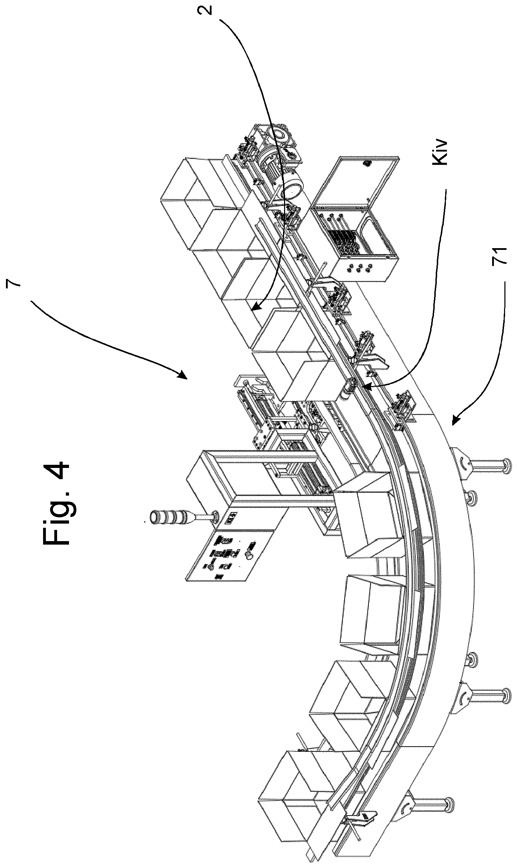

A camera Kiv is placed to take images of articles 2 on conveyor 71 (see figure 4).

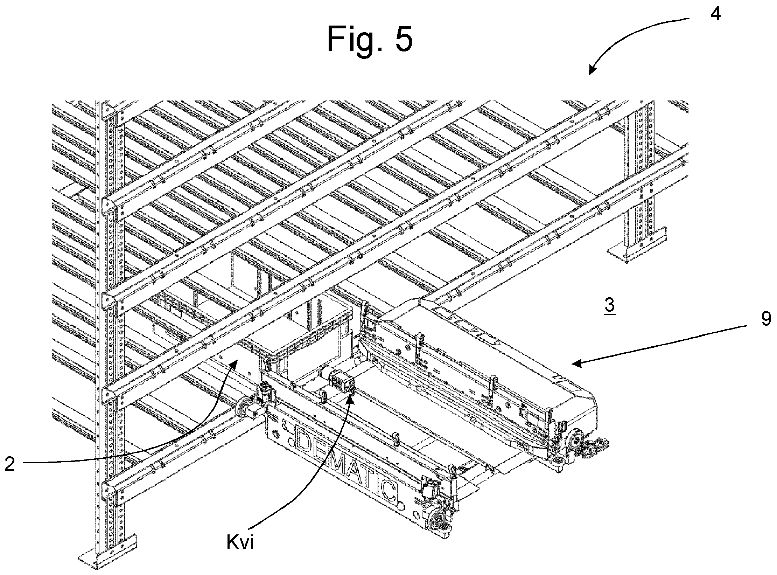

A camera Kvi is likewise provided on the rack serving apparatus 9 and takes images of the article 2 and rack 4 during travel and thus permits real-time capture of the occupancy, orientation and identification of the articles 2 in the rack (see figure 5).

In principle, no light barriers or other sensors are required. The identification and therefore material flow of the article 2 is controlled solely by means of the digital unique identifier based on the image data obtained from the cameras K and the articles 2 and their position or speed identified therefrom.

However, typical sensors, such as light barriers or scanners can also be used additionally or in sections in order to combine e. g., conventional modules.

The warehouse 1000 also includes an area 500 in which persons 501 are active, e. g., working at manual picking stations for processing returns 502, manually placing and removing particular articles 2 into and from storage in a dedicated storage area 503, or even performing installation maintenance.

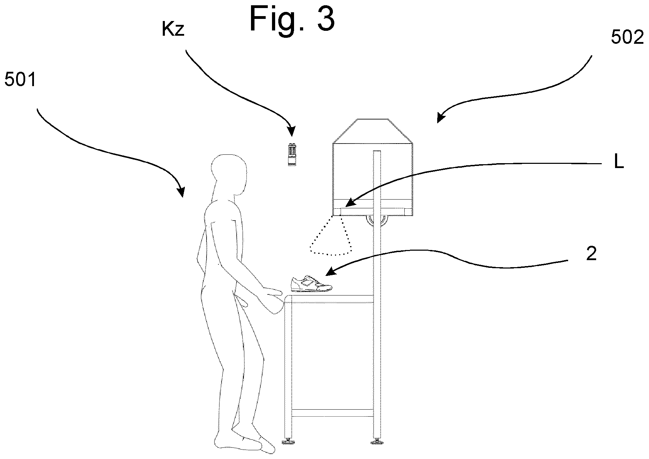

The return stations 502 have a camera Kz (see figure 3) to allow images to be taken of returned articles 2 before they are reintroduced into the warehouse. This allows a digital unique identifier to be calculated and compared (image processing module 300 and downstream identification determination 400) with those in the database in warehouse management controller II in turn allowing to determine if the returned article 2 is an original article or a counterfeit article. Station 502 includes a light source L, directed towards the returned articles to improve the images taken by camera Kz. In addition, autonomous vehicles 504 (AGV) are also travelling in the warehouse 1000, exchanging goods or articles 2 between transfer points of the distribution conveyor 5 and the area 500.

As the movement 600 of the autonomous vehicles 504 and the persons 201 overlap, there is a risk of collisions.

Images depicting the persons 501 and AGV 504 are taken in the region 500 (in a similar manner to the description above) at short intervals by appropriately placed IP cameras Kx,y.

The image data from the IP cameras Kx,y is communicated, in turn, via the network N to the computer I and prepared and processed so that they can be used for determination and movement tracking of the recognized automated machines 504 and persons 501.

The image processing module 300 and downstream identification determination 400 use the image data from the cameras K to positively and uniquely identify articles 2 (items and /or load units, e. g. totes etc.) by using characteristics of their surface to create a digital unique identifier that can be used to identify each article 2.

Image processing module 300 and downstream identification determination 400 use the captured more images of respective article 2 to generate a unique finger print as a digital unique identifier therefrom using characteristic features and/or their combination, including one or more features from the following list: form, edges, surface color, surface structure, surface markings, writing and/or include attributes of the previously mentioned features, especially hue, saturation, brilliance and intensity of color besides color itself, location of the respective feature on the article 2.

This especially allow the user 501 at the returns station 502 to be informed if the article 2 being returned is an original article or a counterfeit article.

Image processing module 300 extracts the characteristic features from the one or more images of the article 2 computes a digital unique identifier therefrom. Identification determination 400 uses this unique identifier for comparison with the database to positively match the present digital unique identifier with the stored digital unique identifiers in the database to identify an article 2.

The database may be fed with a digital unique identifier when an article 2 is encountered for the first time, e. g. when entering the warehouse in a teach-in step.

As mentioned, image data is continuously captured by the IP cameras K, Ki, Kii...Kx,y,z (step S1) and the data from the IP cameras K, Ki, Kii...Kx,y,z is communicated to the computer I via the network N (step S2).

In the computer I, identification and position determination of the articles 2 being conveyed are performed in the modules 300 and 400 from the image data (step S3).

In the computer I, identification and position determination as well as movement tracking of the recognized automated machines 9, 504 and persons 501 are also performed in the modules 300 and 400 from the image data (step S3).

Communication with the warehouse management controller II provides information relating to the expected articles 2 and their properties in order to facilitate or confirm the identification, all based on the use of the digital unique identifiers (step S4).

In addition, on the basis of the known location of the camera K, which provides the respective image data, and of the speed etc. calculated from the difference images, movement may be calculated and used for system control.

Communication with the warehouse management controller II provides information relating to the expected positions in order to facilitate or confirm the identification.

From this information, the control commands for the respective actuators may then be calculated and communicated to the actuators (step S5), wherein potential dangers are taken into account and, if a danger to persons is established, the control commands for actuators of the automated machines are modified such that the danger is eliminated or prevented by anticipatory action.

## Claims

1. Method for identifying articles and/or load units in a warehouse to positively and uniquely identify load units and articles by using characteristics of their surface to create a digital unique identifier that can be used to identify each load unit or article and in turn allows their tracking.

2. Method according to claim 1, wherein the digital unique identifier is based on surface characteristics of the articles and/or load units.

3. Method according to claim 1 or 2, wherein a vision system captures one or more images of the load unit or article and generates a unique finger print as a digital unique identifier therefrom using characteristic features and/or their combination.

4. Method according to claim 3, wherein characteristic features include one or more features from the following list: form, edges, surface color, surface structure, surface markings, writing and/or include attributes of the previously mentioned features, especially hue, saturation, brilliance and intensity of color besides color itself, location of feature on the load unit or article.

5. Method according to a preceding claim, wherein the digital unique identifier is used to identify an article as being an original article or a counterfeit article.

6. Method according to a preceding claim, wherein the digital unique identifier is computed based upon selected features and attributes extracted from one or more images.

7. System for identifying articles and/or load units in a warehouse including a vision system and computational systems, the vision system including at least one camera for capturing images of articles and load units and being data wise connected to the computational systems to exchange image data therewith, the computational system being programmed to allow the computational systems to process the images to extract selected features and attributes and combine their attributes and compute a digital unique identifier based upon them.

8. System according to claim 7, wherein the at least one camera is rigidly mounted to material handling components.

9. System according to claim 8, wherein a light source is mounted in the region of the camera to lighten the articles and load units.

10. System according to claim 8 or 9, wherein a material handling component is a conveyor, rack-servicing-machine, e. g. mini load or shuttle, picking station or returns handling station.
